# EUROPEAN PATENT SPECIFICATION

(11) **EP 2 154 885 B1**
(45) Date of publication and mention of the grant of the patent: **30.11.2011**
(21) Application number: 08706572.8
(22) Date of filing: 28.01.2008
(51) Int. Cl.: H04L 29/08, G09B 21/00, H04M 3/42, G10L 15/26, G09B 21/04, H04N 7/14, H04N 7/15, H04L 29/06, G06F 17/30

(54) **A CAPTION DISPLAY METHOD AND A VIDEO COMMUNICATION CONTROL DEVICE**
BILDUNTERSCHRIFT-ANZEIGEVERFAHREN UND VIDEOKONTROLKOMMUNIKATIONSSYSTEM
PROCÉDÉ D'AFFICHAGE DE LÉGENDE ET APPAREIL DE CONTRÔLE DE COMMUNICATION VIDÉO

(30) Priority: 17.05.2007 CN 200710074542
(43) Date of publication of application: 17.02.2010
(73) Proprietor: Huawei Technologies Co., Ltd., Longgang District, Shenzhen Guangdong 518129 (CN)
(72) Inventor: LIU, Zhihui, 518129 Shenzhen (CN); YUE, Zhonghui, 518129 Shenzhen (CN)
(74) Representative: Kreuz, Georg Maria
(86) International application number: PCT/CN2008/070195
(87) International publication number: WO 2008/141539

(56) References cited:
- WO-A2-02/21843
- CN-A- 1 283 931
- CN-A- 1 283 931
- CN-A- 1 643 573
- US-A- 5 774 857
- US-A1- 2004 119 814
- US-B1- 7 039 675
- POLYCOM, INC.: "Real-time Closed Captioning in Video Conferences" WHITE-PAPER, [Online] 1 January 2004 (2004-01-01), pages 1-4, XP002571714 Retrieved from the Internet: URL:http://www.polycom.com/global/document s/whitepapers/realtime_closed_captioning_i n_video_conferences.pdf> [retrieved on 2010-03-08]
- CLARK W J: "MULTIPOINT MULTIMEDIA CONFERENCING", IEEE COMMUNICATIONS MAGAZINE, IEEE SERVICE CENTER, PISCATAWAY, US, vol. 30, no. 5, 1 May 1992 (1992-05-01), pages 44-50, XP000321470, ISSN: 0163-6804, DOI: DOI:10.1109/35.137478
- WILLEBEEK-LEMAIR M H ET AL: "ON MULTIPOINT CONTROL UNITS FOR VIDEOCONFERENCING", PROCEEDINGS OF THE CONFERENCE ON LOCAL COMPUTER NETWORKS, XX, XX, 2 October 1994 (1994-10-02), pages 356-364, XP000198030,

## Description

### BACKGROUND OF THE INVENTION

### Field of the Technology

The present invention relates to a communication field, and more particularly to a caption display method and a video communication system and device.

### Background of the Invention

With the development of technologies such as Voice over Internet Protocol (IP) (VoIP), Digital Signal Processing (DSP), and network bandwidth, people now may conveniently make long distance calls through a video conference system, and view the expressions and actions of the opposing party through pictures. A conventional video conference system usually includes video terminals, a transmission network, and a multipoint control unit (MCU). The video terminal is adapted to receive a local audio and video input, encode an audio and video code stream, and send the encoded audio and video code stream to a remote end through the transmission network. The video terminal is also adapted to receive and decode the audio and video code stream from the remote end, and recover the sound and pictures of the remote end through local loudspeakers and displays. The MCU is mainly adapted to perform a conference control and a media exchange, for example, one or more multipoint conferences may be held through the MCU. The MCU further receives the audio and video code streams from the terminals, performs an audio mixing, combines multiple frames, and sends the processed audio and video code streams to the corresponding terminals. However, the conventional video communication system mostly does not support a real-time caption display function. If the caption is displayed in real time during the conference, the sound of a speaker is converted to characters, and the characters are synchronously displayed on a screen, visual experience of users is improved, and people with hearing handicap or language barrier may perform the communication by using the video system, so as to overcome the communication handicap.

In an existing solution of the video conference with the caption display, during a conference, the caption that needs to be sent is input by the terminal through an interface, the input text is superposed on the picture, and the picture is encoded, and is sent to a receiving end. After receiving the picture, the receiving end decodes and displays the picture. However, the defect of the prior art is that much manual input is required, so the caption content to be displayed must be edited in advance, and the caption content cannot be transmitted in real time, so that the caption display method is usually only applicable to the information notification of the conference.

US Patent No. 5,774,857 disclosed a communication device with caption display. A telephone and some user interfaces, for example, a keyboard are externally connected to a receiving end, and a speech recognition module is integrated. When a user establishes a call through the telephone, the device receives speech signals form a remote end, and then a speech recognition module converts the received speech signals to text signals, a radio frequency (RF) modulator modulates the text signals to video baseband signals, and sends the signals to a TV set for display.

US 7,039,675 B1 is related to plain voice recognition in a videoconference. It discloses a method and an apparatus for general-purpose terminal which connect to a multipoint videoconferencing system via the Internet to participate in videoconferencing. It focuses on the recognition and converting of the mixed audio signals to text signals and sending the text signals to the general-purpose terminal.

US 2004/119814 A1 discloses a remote video conferencing terminal to participate in a conference over wireless communication links. Additionally, it discloses that the client device can receive text that accompanies the video and multiplex the text with video to provide a closed captioned video signal.

CN 1 283 931 A discloses a method of caption superimposing method.

Willebeek-Lemair M H et al: "On multipoint Control Units for videoconferencing", Processing of the Conference on Local Computer Networks, 2 October 1994, page 356-364, disclose an infrastructure of multipoint control unit for videoconferencing.

Clark W J: "Multipoint Multimedia Conferencing", IEEE Communications Magazine, IEEE Service Center, Piscataway, US, vol. 30, no. 5, 1 May 1992, pages 44-50 discloses a method for multipoint Multimedia conferencing, and audio mixing function can be implement in the MCU.

However, during the implementation of the present invention, the inventors find at least the following technical problems.

In the existing device, the RF modulator modulates the text signals to RF signals, and modulates the RF signals to the video baseband signals for display, so technical complexity of the caption display is increased greatly, and a real-time performance is unfavorable. Next, the speech recognition module of the device is disposed on the receiving end, which is disadvantageous to speech recognition training of users. Further, in the multipoint conference, if the speech signals received by the existing device are speech synthesized signals of a plurality of persons, the single speech recognition module cannot recognize the different speech signals at the same time, so the recognition signals are disordered, and the caption cannot be correctly displayed.

### SUMMARY OF THE INVENTION

In order to solve problems of an existing video communication system that a caption display technology is complicated and a real-time performance is unfavorable, the present invention provides a caption display method, and a video communication control device according to the independent claims 1 and 2, respectively. The caption display method is simple and the real-time performance is high.

Compared with the prior art, the technical solutions in the embodiments of the present invention have at least the following advantages. In the embodiments of the present invention, the speech signals are recognized to the text signals, and the text signals are directly superposed on the video signals for being encoded and transmitted, so that users may directly decode and display pictures and character information corresponding to a speech, and the method is simple and the real-time performance is high.

### BRIEF DESCRIPTION OF THE DRAWINGS

To illustrate the technical solutions according to the embodiments of the present invention or in the prior art more clearly, the accompanying drawings for describing the embodiments or the prior art are introduced briefly in the following.
FIG. 1 is a simple schematic view of principles of a point-to-point communication of a video communication system and device according to a first embodiment of the present invention;
FIG. 2 is a simple schematic view of principles of a point-to-point communication of a video communication system and device according to a second embodiment of the present invention;
FIG. 3 is a simple schematic view of principles of a multipoint communication of a video communication system and device according to an embodiment of the present invention; and
FIG. 4 is simple schematic flow chart of a caption display method in a video communication according to an embodiment of the present invention.

### DETAILED DESCRIPTION OF THE EMBODIMENTS

The technical solutions according to the embodiments of the present invention are described clearly and completely with reference to the accompanying drawings of the embodiments. Apparently, the embodiments herein are only a part of rather than all of the embodiments of the present invention.

In the present invention, a video communication system includes video terminals, speech recognition modules, video encoding modules, an MCU, and a transmission network, in which users input speech signals and video signals through the video terminals, the speech recognition modules convert the input speech signals to text signals, the video encoding modules perform a caption superposing on the text signals and the video signals and encode the text signals and the video signals, and send the text signals and the video signals to a remote end through the transmission network.

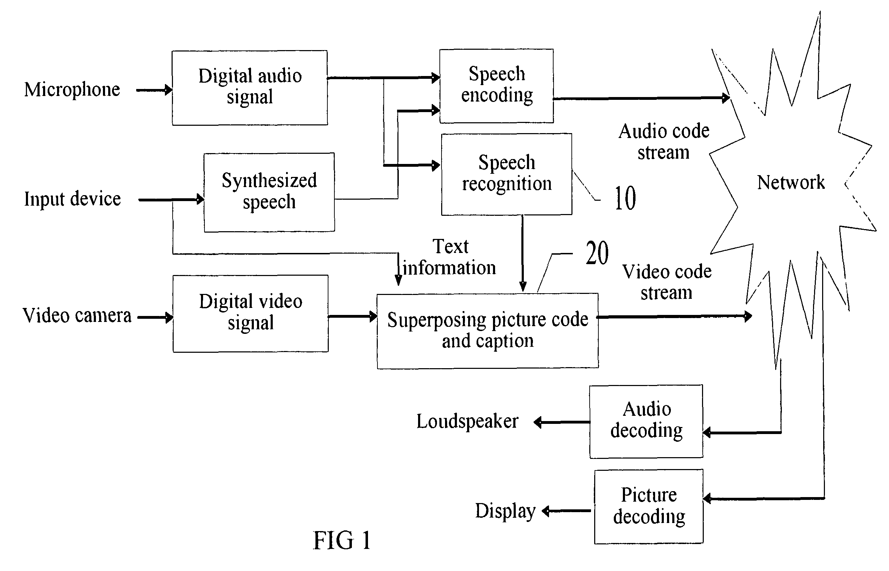

Referring to FIG. 1, a speech recognition module 10 and a video encoding module 20 according to a first embodiment of the present invention are integrated in a video terminal. The speech recognition module 10 is connected to a speech capturing module (microphone), and is adapted to recognize speech signals collected by the microphone to text signals, and transmit the text signals to the video encoding module 20. The video encoding module 20 is connected to a video camera, and is adapted to superpose the text signals on picture video signals collected by an image capturing module (video camera), encode the text signals and the picture video signals, and send the text signals and the picture video signals to a remote end, so that remote users may view recognized caption information displayed synchronously with the speech signals in real time, so a session experience of the users is improved, and particularly some people with hearing handicap may normally communicate.

It should be noted that the speech recognition module 10 of this embodiment is integrated in the video terminal, so that it is convenient for the user to perform a speech recognition training to improve a recognition rate. Next, the speech recognition module 10 may be set to be enabled according to demands of the user. When multiple people participate in a multipoint conference, a multipoint distributing function is supported. In addition, a speech synthesizing module may be further integrated in the video terminal of this embodiment. After the user inputs character information through a character input module (a keyboard or in other manners), the speech synthesizing module converts the character information to speech signals, and sends the character information to the video encoding module 20. The video encoding module 20 superposes the information input by the user on the picture video signals, encodes the information and the picture video signals, and sends the information and the picture video signals to the remote end. At the same time, the converted speech signals are sent to a speech encoding module for being encoded, and are sent to the remote end. In this manner, a dumb person or a person with language barrier may communicate with an opposite party through the video communication device of the present invention.

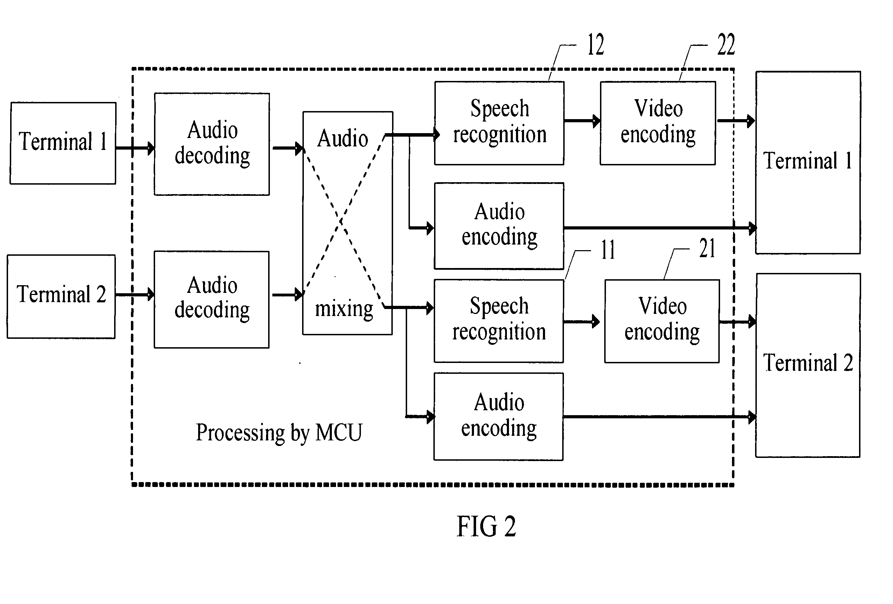

Referring to FIG. 2, speech recognition modules and video encoding modules of a second embodiment of the present invention are integrated in an MCU. A plurality of speech recognition modules and video encoding modules are integrated in the MCU. Here, communication terminals implement the conference control and media exchange through the MCU. The MCU correspondingly configures and starts the plurality of speech recognition modules and video encoding modules according to the number of users taking part in the video communication. For example, at a point-to-point conference, when receiving speeches of a terminal 1 and a terminal 2, the MCU performs a decoding process, and then sends a decoded speech signal of the terminal 1 to a first speech recognition module 11. The first speech recognition module 11 recognizes and converts a sound of the terminal 1 to a text signal and transmits the text signal to a first video encoding module 21 corresponding to the terminal 2. The first video encoding module 21 superposes the text signal of the terminal 1 on a video picture, encodes the text signal and the video picture, and sends the text signal and the video picture to the terminal 2. A decoded speech signal of the terminal 2 is sent to a second speech recognition module 12. The second speech recognition module 12 recognizes and converts a sound of the terminal 2 to a text signal, and transmits the text signal to a second video encoding module 22 corresponding to the terminal 1. The second video encoding module 22 superposes the text signal of the terminal 2 on a video picture, encodes the text signal and the video picture, and sends the text signal and the video picture to the terminal 1. In this manner, after respectively decoding received video code streams, the terminal 1 and the terminal 2 may view the corresponding caption.

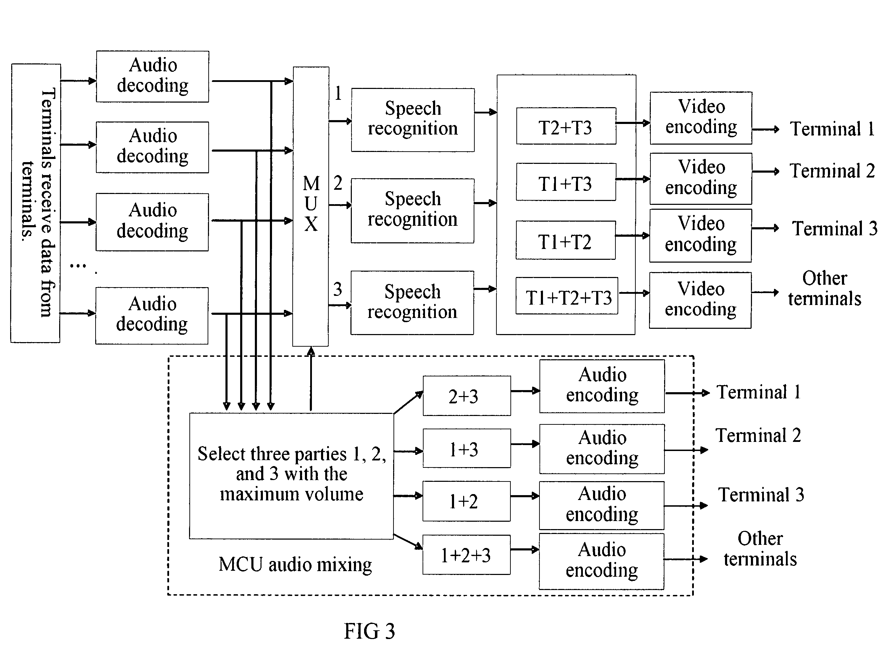

Referring to FIG. 3 together, when a multipoint conference is held through the second embodiment of the present invention, the MCU correspondingly configures and starts the plurality of speech recognition modules and video encoding modules according to the number of the users taking part in the video communication, or the number of the speech recognition modules to be started is set in the system. For example, three speech recognition modules are started. Firstly, the MCU receives audio and video data of each terminal, and decodes the audio data. Then, an audio mixing module performs audio mixing, and during the audio mixing process, three sites with maximum volume are obtained, for example, sites 1, 2, and 3. Speech data of the three sites with the maximum volume is respectively sent to three speech recognition modules. The speech recognition modules recognize the speeches of the three sites with the maximum volume, so as to obtain text signals T1, T2, and T3 corresponding to the speeches, and then sends the text signals to the video encoding modules corresponding to the sites. The video encoding modules superpose the text signals and the video signals, and then send the text signals and the video signals to the terminals. For example, the caption sent to the site 1 is the speech text signals after the speeches of the site 2 and the site 3 are recognized, the caption sent to the site 2 is the text signals after the speeches of the site 1 and the site 3 are recognized, and the caption sent to the site 3 is the text signals after the speeches of the site 1 and the site 2 are recognized. The captions sent to other sites are the text signals after the speeches of the site 1, the site 2, and the site 3 are recognized.

It may be understood that during the audio mixing process, the MCU firstly obtains the three sites 1, 2, and 3 with the maximum sound, and then superposes and encodes the sounds of the site 2 and site 3, and sends the sounds to the site 1. Thus, persons in the site 1 hear the sounds of the site 2 and the site 3. The sounds of the site 1 and the site 3 are superposed and encoded, and are sent to the site 2. Thus, persons in the site 2 hear the sounds of the site 1 and the site 3. Correspondingly, persons in the site 3 hear the sounds of the site 1 and the site 2. As such, the caption displayed in each site is corresponding to the sound heard by persons in the site. After receiving the audio and video code streams, the terminals of each site decode the audio and video code streams, the sound may be recovered and the caption corresponding to the sound may be viewed through loudspeakers and displays. In addition, the caption display of the three-party audio mixing is taken for example in the above description; however, the video communication device of the present invention may be configured to display only the caption of one party with the maximum volume or the captions of two parties with the maximum volume, or may be configured to perform the caption display in other multi-party audio mixing modes according to the demand of users.

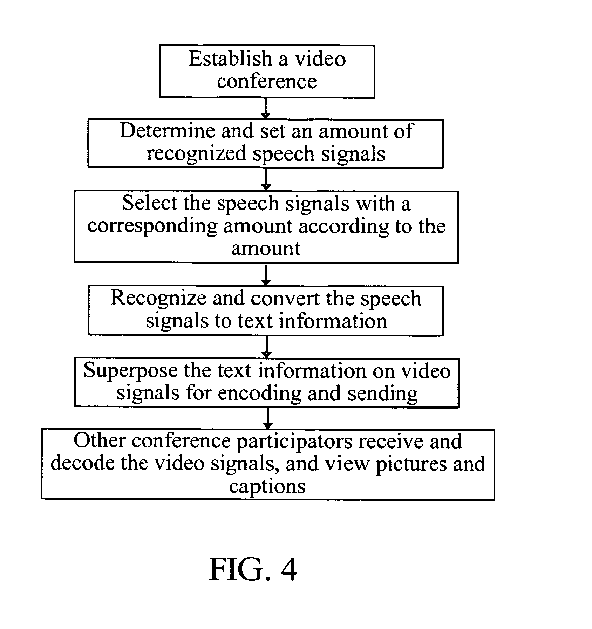

Referring to FIG. 4, as described above, a caption display method in a video communication according to the present invention includes the following steps.

In Step 1, a video communication is established.

In Step 2, an amount of recognized speech signals is determined and set.

In Step 3, a volume of each site is determined, and the speech signals of speakers with maximum volume of a number corresponding to the amount are selected.

In Step 4, the speech signals of the speaker are recognized and converted to text signals.

In Step 5, the text signals and picture video signals that need to be received by and displayed to other conference participators (picture video signals of sites of the speakers corresponding to the speech signals in this embodiment) are superposed and encoded in real time, and are respectively sent to other conference participators.

In Step 6, other conference participators receive and decode the video signals with the superposed text signals, and view pictures and captions.

It is understood that in the method, the amount of the recognized speech signals may be determined and selected according to a value set by the system or manually, or the amount of the recognized speech signals may not be set and the speech of the site of each participator is recognized. Next, other conference participators may respectively control and select the site pictures needed to be received and displayed, the participators may select to display the site picture of the speaker, or the site pictures of other non-speakers. No matter which site is selected, it is only necessary to superpose and encode the text signal of the speaker and the picture video signal of the site to be displayed selected by each conference participator.

It is understood that the speech recognition modules and the video encoding modules of the video communication system of the present invention may also be disposed in other devices or dedicated devices in the system and the transmission network together, or may be separately disposed in different devices in the system and the transmission network. The speech recognition modules and the video encoding modules cooperate to recognize the speech signals to the text signals, and directly superpose the text signals on the video signals for being encoded and transmitted. The user may directly decode the display pictures and the character information corresponding to the speech. Therefore, the method is simple, and the real-time performance is high.

## Claims

1. A caption display method processed by an Multipoint Control Unit, MCU, in a multipoint conference, the MCU comprises a plurality of speech recognition modules and a plurality of video encoding modules, the MCU configures and starts the plurality of speech recognition modules and video encoding modules, wherein the number of speech recognition modules to be started is set in the system, the method comprising:
establishing a video communication between sites;
receiving, by the MCU, speech signals and video signals of each site, and decoding the speech signals;
performing, by the MCU, audio mixing, and obtaining a number of the sites with maximum volume during the audio mixing process; wherein the number of the sites with maximum volume corresponds to the number of the speech recognition modules started by the MCU;
recognizing and converting respectively, by the number of the speech recognition modules, speech signals of the sites with maximum volume to corresponding text signals; and sending the text signals to the video encoding modules corresponding to the sites;
superposing and encoding, by the video encoding modules, the text signals and corresponding video signals that need to be received by and displayed to other conference sites, and sending the superposed and encoded text signals and video signals to the sites through the video communication.

2. A video communication control device, comprising a multipoint control unit, MCU, and a plurality of video terminal devices, the plurality of video terminal devices connect to the MCU, each of the video terminal devices comprises a speech capturing module and an image capturing module, the MCU integrates a plurality of speech recognition modules and a plurality of video encoding modules, wherein
the MCU is adapted to perform the caption display method according to claim 1.

## Patentansprüche

1. Beschriftungsanzeigeverfahren, verarbeitet durch eine Multipoint Control Unit, MCU (Mehrpunktsteuereinheit), in einer Mehrpunktkonferenz, wobei die MCU mehrere Spracherkennungsmodule und mehrere Videocodiermodule umfasst, wobei die MCU die mehreren Spracherkennungsmodule und Videocodiermodule konfiguriert und startet, wobei die zu startende Anzahl von Spracherkennungsmodulen in dem System eingestellt ist, wobei das Verfahren Folgendes umfasst:
Herstellen einer Videokommunikation zwischen Orten;
Empfangen von Sprachsignalen und Videosignalen jedes Orts durch die MCU und Decodieren der Sprachsignale;
Durchführen eines Audiomischens durch die MCU und Erhalten einer Anzahl der Orte mit maximaler Lautstärke während des Audiomischprozesses; wobei die Anzahl der Orte mit maximaler Lautstärke der Anzahl der von der MCU gestarteten Spracherkennungsmodule entspricht;
Erkennen beziehungsweise Umwandeln von Sprachsignalen an den Orten mit größter Lautstärke durch die Anzahl der Spracherkennungsmodule in entsprechende Textsignale; und Senden der Textsignale an die den Orten entsprechenden Videocodiermodule;
Überlagern und Codieren der Textsignale und der entsprechenden Videosignale, die von anderen Konferenzorten empfangen und angezeigt werden müssen, durch die Videocodiermodule und Senden der überlagerten und codierten Textsignale und Videosignale an die Orte durch die Videokommunikation.

2. Videokommunikationssteuereinrichtung, umfassend eine Mehrpunktsteuereinheit, MCU, und mehrere Videoanschlusseinrichtungen, wobei die mehreren Videoanschlusseinrichtungen mit der MCU verbunden sind, wobei jede der Videoanschlusseinrichtungen ein Spracherfassungsmodul und ein Bilderfassungsmodul umfasst, die MCU mehrere Spracherkennungsmodule und mehrere Videocodiermodule integriert, wobei
die MCU ausgelegt ist zum Durchführen des Beschriftungsanzeigeverfahrens nach Anspruch 1.

## Revendications

1. Procédé d'affichage de sous-titres mis en oeuvre par un pont de conférence multipoint, dit MCU, dans le cadre d'une conférence multipoint, le MCU comprenant une pluralité de modules de reconnaissance vocale et une pluralité de modules de codage vidéo, le MCU configurant et déclenchant la pluralité de modules de reconnaissance vocale et la pluralité de modules de codage vidéo, le nombre de modules de reconnaissance vocale à déclencher étant défini dans le système, le procédé comprenant les étapes consistant à :
établir une vidéocommunication entre des sites;
recevoir, au moyen du MCU, des signaux vocaux et des signaux vidéo de chaque site, et décoder les signaux vocaux;
réaliser, au moyen du MCU, un mixage audio et obtenir un nombre de sites à volume maximal au cours du processus de mixage audio, le nombre de sites à volume maximal correspondant au nombre de modules de reconnaissance vocale déclenchés par le MCU ;
reconnaître et convertir respectivement, au moyen du nombre de modules de reconnaissance vocale, des signaux vocaux des sites à volume maximal en signaux de texte correspondants, et transmettre les signaux de texte aux modules de codage vidéo correspondant aux sites;
superposer et coder, au moyen des modules de codage vidéo, les signaux de texte et les signaux vidéo correspondants destinés à être reçus par d'autres sites de conférence et affichés sur ceux-ci, et transmettre aux sites les signaux de texte et les signaux vidéo superposés et codés par l'intermédiaire de la vidéocommunication.

2. Dispositif de commande de vidéocommunication, comprenant un pont de conférence, dit MCU, et une pluralité de dispositifs terminaux vidéo, la pluralité de dispositifs terminaux vidéo étant reliés au MCU, chacun des dispositifs terminaux vidéo comprenant un module de saisie vocale et un module de saisie d'image, le MCU intégrant une pluralité de modules de reconnaissance vocale et une pluralité de modules de codage vidéo,
le MCU étant conçu pour mettre en oeuvre le procédé d'affichage de sous-titres selon la revendication 1.
